# EUROPÄISCHE PATENTANMELDUNG

(11) **EP 1 850 047 A1**
(43) Veröffentlichungstag der Anmeldung: **31.10.2007**
(21) Anmeldenummer: 06008628.7
(22) Anmeldetag: 26.04.2006
(51) Int. Cl.: F16L 21/035

(54) **Rohreinführhilfe für einen Rohrfitting und Rohrfitting-Einführhilfe-System**

(71) Anmelder: Hawle Armaturen GmbH, 83395 Freilassing (DE)
(72) Erfinder: Käfer, Manuela, 5310 Mondsee (AT)
(74) Vertreter: Rögner, Jürgen

(57) **Zusammenfassung**

Die Erfindung betrifft eine Rohrfitting-Rohreinführhilfe (1), die einen ringförmigen Körper (6) umfasst, der an einem Stirnende eine Rohranschlagfläche (5) und zum anderen Stirnende hin einen sich an der Außenseite nach innen verjüngenden Dichtungs-Eingriffsabschnitt (2) aufweist. Sie betrifft ferner ein Rohrfitting-Einführhilfe-System mit einer solchen Rohreinführhilfe (1), die im Bereich des Dichtungs-Eingriffsabschnittes (2) bzw. im Bereich des Dichtungs-Angriffsbundes an oder in einer Rohrfittingdichtung (14) gelagert ist, die als Ringdichtung in den Innenumfang des Rohrfittings (10) eingesetzt ist.

## Beschreibung

Die Erfindung betrifft eine Rohreinführhilfe für einen Rohrfitting und ein Rohrfitting-Einführhilfe-System. Rohrfittinge werden bei der Verbindung von Rohren für den Transport von Gasen oder Flüssigkeiten eingesetzt. Sie bestehen meist aus zwei miteinander verbindbaren Teilen, die zwei zu verkoppelnde Rohrleitungsenden umschließen. In einem der Fittingsteile ist dabei meist eine Dichtung vorgesehen, die zwischen der Innenwand des Fittingteils und einem in das Fittingteil einzusetzenden Rohr abdichtet. Solche Dichtungen sind in vielen Fällen Ringdichtungen.

Bei üblichen Systemen wird das Rohr von einem Ende des Rohfittings her in diesen eingeschoben und geht durch die Dichtung hindurch, bevor es seinen endgültigen Sitz einnimmt. Die Fittinge sind dabei gemäß den Kundenwünschen in ihren Innenabmessungen so ausgestaltet, dass das Rohr eingeschoben werden kann, ohne das es vorab an seinem Rand angefast werden muss. Man will sich dabei einen Arbeitsgang während der Einbauarbeiten ersparen.

Das Problem hierbei liegt darin, dass das scharfe Ende des Rohres bei der Montage in dem Fitting die bereits darin vorgesehene Dichtung verletzen kann. Es ist eine Aufgabe der vorliegenden Erfindung, es zu ermöglichen, dass ein unbearbeitetes Rohrende in einem Rohrfitting eingesetzt werden kann, ohne dass eine Verletzung der Rohrfittingdichtung zu befürchten ist.

Diese Aufgabe wird durch die Bereitstellung einer Rohrfitting-Rohreinführhilfe gemäß dem Anspruch 1 sowie durch ein Rohrfitting-Einführhilfe-System gemäß dem Anspruch 6 gelöst. Die Unteransprüche definieren bevorzugte Ausführungsformen der Erfindung.

Die erfindungsgemäße Rohrfitting-Rohreinführhilfe umfasst einen ringförmigen Körper, der an einem Stirnende eine Rohranschlagfläche und zum anderen Stirnende hin einen sich an der Außenseite nach innen verengenden Dichtungs-Eingriffsabschnitt aufweist. Die Rohranschlagfläche kann einem eingeführten Rohr eine Stossfläche bieten, die nicht verletzt wird, wenn das Rohr eingeschoben wird. Der Dichtungs-Eingriffsabschnitt ermöglicht es, das Einführen des Rohres in die Dichtung vorzubereiten, wobei anfangs nur der Dichtungs-Eingriffsabschnitt in Kontakt mit der Dichtung kommt und damit eine Verletzung oder Beschädigung der Dichtung ausgeschlossen wird.

Die Rohranschlagfläche kann den Stirnabschluss eines sich nach außen verbreiterten Abschnitt des Körpers bilden, und sie bewirkt dadurch eine Aufweitung der Dichtung, wenn die Rohreinführhilfe in sie eindringt.

Gemäß einer Ausführungsform der erfindungsgemäßen Rohreinführhilfe weist der ringförmige Körper den gleichen Innendurchmesser über seine axiale Erstreckung von einem Stirnende zum anderen auf. Damit wird eine einfache Herstellbarkeit gewährleistet.

Eine erfindungsgemäße Ausführungsvariante der Rohreinführeinhilfe zeichnet sich dadurch aus, dass der ringförmige Körper zwischen den Stirnenden, insbesondere zwischen dem Dichtungs-Eingriffsabschnitt und dem sich nach außen verbreiternden Abschnitt einen Abschnitt mit gleich bleibendem Außendurchmesser aufweist, der als Dichtungs-Lagerbund zum Positionieren der Einführhilfe dient. Mit dem Positionieren ist hier die Grundpositionierung der Einführhilfe gemeint, die schon vorpositioniert und im Eingriff mit der Dichtung zusammen in dem Fitting bereitgestellt werden kann.

Um ganz sicher zu stellen, dass eine Beschädigung der Dichtung auch durch die Rohreinführhilfe nicht stattfinden kann, kann der Dichtungs-Eingriffsabschnitt an seiner Stirnseite entkantet, insbesondere abgerundet sein.

Das erfindungsgemäße Rohrfitting-Einführhilfe-System weist eine Rohreinführhilfe auf, wie sie oben in verschiedenen Ausführungen beschrieben wurde. Diese Rohreinführhilfe ist im Bereich des Dichtungs-Eingriffsabschnittes bzw. im Bereich des Dichtungs-Lagerbundes an oder in einer Rohrfitting-Dichtung gelagert, die als Ringdichtung in den Innenumfang eines Rohrfittings eingesetzt ist. Die Rohranschlagfläche kann dabei von der Dichtung weg zum Rohreinführungsende des Fittings zeigen.

Bei einer Ausführungsform des erfindungsgemäßen Systems ist der Außendurchmesser der Einführhilfe an jeder Stelle kleiner als der engste Innendurchmesser des Fittings in dessen Dichtungsbereich. So kann sichergestellt werden, dass die Dichtung von einem eingeführten Rohrende mittels der Einführhilfe sozusagen vorab aufgeweitet wird, wobei im weiteren Verlauf des Einschiebens die Einführhilfe durch die Dichtung hindurch weitergeschoben werden kann, bis die Dichtung an ihrem Sitz über dem Rohr liegt. Es ist hierbei von Vorteil, wenn die Rohranschlagfläche, eine Ringfläche, außen etwas größer dimensioniert wird als Rohre, die zum Einschieben in die Fittinge vorgesehen sind, damit sichergestellt wird, dass scharfe Stirnkanten des Rohres nicht direkt mit der Dichtung in Kontakt kommen.

Die Erfindung wird im Weiteren anhand einer Ausführungsform näher erläutert. Sie kann alle hierin beschriebenen Merkmale einzeln sowie in jeder sinnvollen Kombination umfassen. In den beiliegenden Zeichnungen zeigen:
- Figur 1: eine erfindungsgemäße Rohrfitting-Rohreinführhilfe in einem perspektivischen Halbschnitt;
- Figur 2: die Rohreinführhilfe aus Figur 1 in einer perspektivischen Gesamtdarstellung; und
- Figur 3: eine Rohreinführhilfe, die an ihrem Einsatzort in einem Rohrfitting positioniert ist.

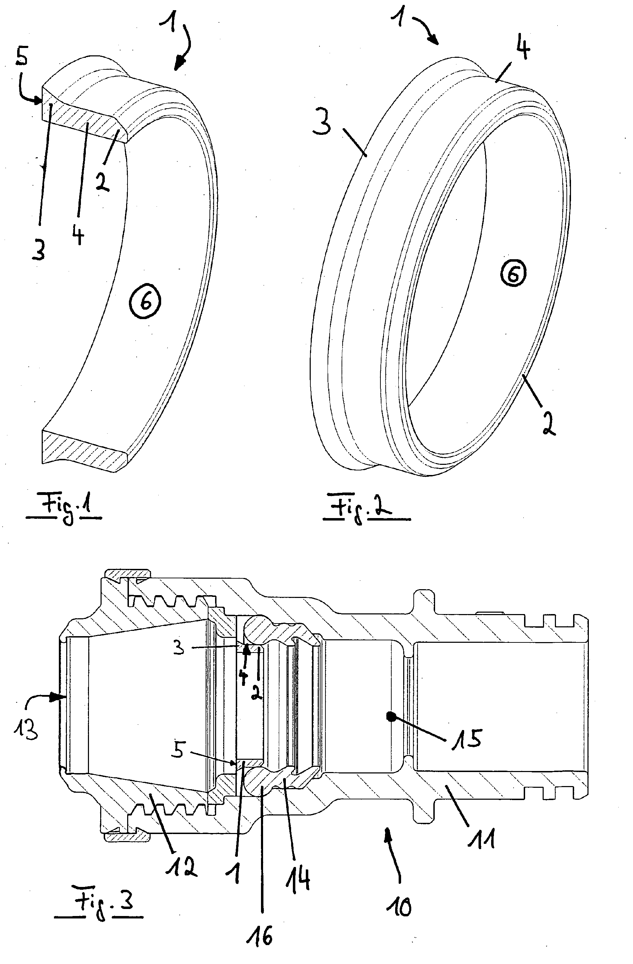

Die erfindungsgemäße Rohreinführhilfe ist in den Figuren insgesamt mit dem Bezugszeichen 1 angedeutet. Sie weist, wie in den Figuren 1 und 2 zu sehen ist, einen ringförmigen Körper 6 auf, den man in verschiede Abschnitte unterteilen kann. Am weiter links dargestellten Stirnende hat der Körper 6 eine äußere Aufweitung und bildet damit einen konisch zum Stirnende hin erweiterten, sich verbreiternden Abschnitt 3. Die Stirnseite dieses Abschnittes 3 ist mit dem Bezugszeichen 5 gekennzeichnet, und sie bildet die Rohranschlagfläche der Einführhilfe 1. An den sich zur Fläche 5 hin verbreiternden Abschnitt 3 schließt sich ein Abschnitt 4 an, in dem der ringförmige Körper 6 an der Außenseite einen gleich bleibenden Durchmesser aufweist. Dieser Abschnitt kann auch als Dichtungs-Lagerbund 4 bezeichnet werden, und seine Funktion wird später anhand der Figur 3 näher erläutert.

Wie ferner den Figuren 1 und 2 zu entnehmen ist, bildet der Dichtungs-Eingriffsabschnitt 2 den anderen Stirnabschluss des Körpers 6, und dieser Dichtungs-Eingriffsabschnitt 2 verjüngt sich an seiner Außenseite nach innen bis zu einem dünnen Rand hin. Der Dichtungs-Eingriffsabschnitt hat an diesem Rand keine scharfen Kanten sondern ist durch seine Form relativ gut abgerundet.

lnsgesamt weist die Rohrfitting-Rohreinführhilfe eine sich außen konisch verjüngende Form auf, und zwar ausgehend von der Rohranschlagfläche 5. An der Innenseite hat sie überall den gleichen Durchmesser.

ln der Figur 3 ist ein Rohrfitting 10 gezeigt, der ein Teil eines erfindungsgemäßen Rohrfitting-Einführhilfe-Einführsystems ist. Der Rohrfitting 10 ist zweiteilig und aus dem Gehäuse 11 und dem Konuskörper 12 aufgebaut, an dessen Stirnseite die Einführöffnung 13 für das Rohr angeordnet ist. lm Gehäuse 11 liegt eine Ringdichtung 14 an ihrem vorgesehenen Sitz. Die Ringdichtung weist einen O-Ring-Abschnitt 16 und zwei nach innen vorstehende Lippendichtungsabschnitte auf. Am O-Ring-Abschnitt 16 der Ringdichtung 14 ist die Einführhilfe 1 in ihrer Ausgangsposition gelagert; der Fitting 10 wird mit der so positionierten Einführhilfe werkseitig ausgeliefert. Die Einführhilfe 1 greift im Bereich des 0-Ring-Abschnittes 16 schon innen in die Dichtung 14 ein, und zwar so, dass die innere Wandung des 0-Ring-Abschnittes 16 im Bereich des Dichtungs-Lagerbundes 4 auf der Einführhilfe 1 von außen aufliegt. Es kann eine Ausgestaltung gewählt werden, bei der der Lagerbund 4 schon einen etwas größeren Durchmesser hat als der Innendurchmesser der Dichtung 1 im unbelasteten Zustand und im Bereich des O-Ring-Abschnittes 16, so dass die Einführhilfe 1 nach dem Einstecken in die Dichtung 14 dort durch Reibschluss gehalten wird und verbleibt.

Wenn nun über die Öffnung 13 ein Rohr (in Figur 3 von links) in den Fitting 10 eingeführt wird, so wird dieses Rohr mit seiner Stirnkante zunächst an die Anschlagfläche 5 anstoßen. Beim weiteren Vorbringen des Rohres schiebt dieses die Einführhilfe 1 weiter in die Dichtung 14 hinein. Die Dichtung 14 wird dabei durch den sich verbreiternden Abschnitt 3 aufgeweitet und kann deshalb beim weiteren Voranschieben nicht so mit einem eventuell scharfen Bereich des Rohrstirnendes in Kontakt kommen, dass eine Beschädigung der Dichtung eintreten würde. Das Rohr kann weiter eingeschoben werden, bis die Einführhilfe 1 und das Rohrende hinten im Bereich der zweiten Dichtunglippe aus der Dichtung austreten und auch hier wird durch die Einführhilfe 1 dafür gesorgt, dass die Dichtung 14 nicht beschädigt wird.

Wenn dann das Rohr in seiner Endposition angekommen ist, wird es die durch die Dichtung 14 hindurchgedrückte Einführhilfe 1 in dem Bereich positioniert haben und halten, der mit dem Bezugszeichen 15 angedeutet ist. Die Einführhilfe kann dann nicht mehr verkippen oder die Strömung behindern und die Dichtung 14 liegt unverletzt in ihrem Sitz über dem Rohr.

Es wird somit durch die vorliegende Erfindung ermöglicht, auch scharfkantige und nicht bearbeitete Rohre in einen Fitting einzuschieben, ohne eine Beschädigung oder Verletzung der Dichtung und damit auch der Dichtwirkung befürchten zu müssen. Die Einführhilfe kann aus einem relativ steifen Kunststoffmaterial hergestellt sein, das gut durch eine Gummidichtung hindurchrutschen kann.

## Patentansprüche

1. Rohrfitting-Rohreinführhilfe (1), die einen ringförmigen Körper (6) umfasst, der an einem Stirnende eine Rohranschlagfläche (5) und zum anderen Stirnende hin einen sich an der Außenseite nach innen verjüngenden Dichtungs-Eingriffsabschnitt (2) aufweist.

2. Rohreinführhilfe (1) nach Anspruch 1, **dadurch gekennzeichnet, dass** die Rohranschlagfläche (5) den Stirnabschluss eines sich nach außen verbreiternden Abschnittes (3) des Körpers (6) bildet.

3. Rohreinführhilfe (1) nach Anspruch 1 oder 2, **dadurch gekennzeichnet, dass** der ringförmige Körper (6) den gleichen Innendurchmesser über seine axiale Erstreckung von einem Stirnende zum anderen aufweist.

4. Rohreinführhilfe (1) nach einem der Ansprüche 1 bis 3, **dadurch gekennzeichnet, dass** der ringförmige Körper (6) zwischen den Stirnenden, insbesondere zwischen dem Dichtungs-Eingriffsabschnitt (2) und dem sich nach außen verbreiternden Abschnitt (3) einen Abschnitt mit gleich bleibendem Außendurchmesser aufweist, der als Dichtungs-Lagerbund (4) zum Positionieren der Einführhilfe (1) dient.

5. Rohreinführhilfe (1) nach einem der Ansprüche 1 bis 3, **dadurch gekennzeichnet, dass** der Dichtungs-Eingriffsabschnitt an seiner Stirnseite entkantet, insbesondere abgerundet ist.

6. Rohrfitting-Einführhilfe-System mit einer Rohreinführhilfe (1) nach einem der vorhergehenden Ansprüche, die im Bereich des Dichtungs-Eingriffsabschnittes (2) bzw. im Bereich des Dichtungs-Lagerbundes (4) an oder in einer Rohrfittingdichtung (14) gelagert ist, die als Ringdichtung in den Innenumfang eines Rohrfittings (10) eingesetzt ist.

7. Rohrfitting-Einführhilfe-System nach Anspruch 6, **dadurch gekennzeichnet, dass** die Rohranschlagfläche (5) von der Dichtung (14) weg zum Rohreinführungsende (13) des Fittings (10) zeigt.

8. Rohrfitting-Einführhilfe-System nach Anspruch 6 oder 7, **dadurch gekennzeichnet, dass** der Außendurchmesser der Einführhilfe (1) an jeder Stelle kleiner als der engste Innendurchmesser des Fittings (10) in dessen Dichtungsbereich ist, so dass die Dichtung (14) von einem eingeführten Rohrende mittels der Einführhilfe aufgeweitet und die Einführhilfe (1) dabei durch die Dichtung (14) hindurch weiter geschoben werden kann.
